# EUROPEAN PATENT SPECIFICATION

(11) **EP 3 569 064 B1**
(45) Date of publication and mention of the grant of the patent: **26.08.2020**
(21) Application number: 18710909.5
(22) Date of filing: 04.01.2018
(51) Int. Cl.: A01N 1/02

(54) **ORGAN PERFUSION DEVICE**
ORGANPERFUSIONSVORRICHTUNG
ÉQUIPEMENT DE PERFUSION D'ORGANES

(30) Priority: 12.01.2017 ES 201730030
(43) Date of publication of application: 20.11.2019
(73) Proprietor: Ebers Medical Technology, S.L., 50720 La Cartuja Baja (Zaragoza) (ES)
(72) Inventor: ALASTRUÉ VERA, Víctor, 50720 La Cartuja Baja (Zaragoza) (ES); MOREO CALVO, Pedro, 50720 La Cartuja Baja (Zaragoza) (ES); USÓN JULIÁN, Fernando, 50720 La Cartuja Baja (Zaragoza) (ES); MAINAR LÓPEZ, Marta, 50720 La Cartuja Baja (Zaragoza) (ES); CONTE BLASCO, Javier, 50720 La Cartuja Baja (Zaragoza) (ES)
(74) Representative: Pons Ariño, Angel
(86) International application number: PCT/ES2018/070005
(87) International publication number: WO 2018/130732

(56) References cited:
- EP-A1- 3 072 537
- WO-A1-96/29865
- WO-A2-02/26034
- JP-A- H01 308 201
- US-A1- 2007 015 131
- US-A1- 2011 294 108
- US-A1- 2014 370 490
- US-A1- 2015 342 177

## Description

### FIELD OF THE INVENTION

The present invention relates to the organ preservation technical field and, more specifically, describes an equipment for the extra-corporeal preservation of human organs.

### BACKGROUND TO THE INVENTION

Several solutions for organ preservation are found in the state of the art. Usually, these solutions comprise the cold storage of an organ in a regular portable ice-box to keep the organ at low temperature (around 4°C).

Any organ suffers severe damages in an oxygen lack situation when disconnected from the blood stream and these damages are very serious if take place at normothermic conditions (37°C). In standard organ preservation methods, temperature is reduced to minimise those damages. Since temperature is kept at around 4°C, the metabolic activity of the organ is notably reduced and its oxygen needs are reduced by 90%, which allows preserving the organ ex-vivo for a period that varies between 2 and 20 hours as depending on the organ type.

The technical problem of these preservation methods is that organs are not maintained in a functional state during the preservation, but their metabolic rate is totally altered.

Moreover, despite the low temperature, the organ is damaged during both the preservation and the implantation process due to the ischaemia-reperfusion damage phenomenon.

Such organ damages make the current preservation techniques only compatible with optimal organs, which is an important limitation to the number of organs available for transplantation, which is well below the current needs.

From the current state of the art it is known, e.g., document US2014308654, which describes an organ perfusion system comprising a circuit through which the perfusate is pumped towards the organ, a surrogate organ that may be connected to the circuit and several sensors that allow determining whether what is connected to the system is the surrogate organ or the real organ to be perfused.

Document US8822203 describes systems, methods and devices especially designed to permit the correct preservation of lungs for transplantation. They allow perfusing organs for a certain period while the conditions are maintained stable to improve their preservation state.

Document WO2012128696 describes a device for organ preservation for transplantation that comprises a container that holds a fluid and a connector that serves to connect the organ to a duct through which the fluid is impelled by a pump. Moreover, it describes the connections needed to vent air bubbles before the organ is connected to the tube system to allow fluid perfusion.

JP 01308201 discloses an organ perfusion device comprising an artificial vision system that comprises an optical fiber sensor configured to take images of the organ.

EP 3 072 537 A1 discloses an organ perfusion device comprising a photographing unit to monitor the change in state of the organ.

WO 02/26034 A2 discloses an organ perfusion device, wherein an organ cassette may be constructed of an optically clear material to allow for monitoring of the organ and to allow for video images or photographs to be taken of the organ.

### DESCRIPTION OF THE INVENTION

The invention is defined in the claims.

The present invention presents an organ perfusion device that solves the technical problems of the currently known state of the art solutions.

It is disclosed a device that allows preserving the organ in normothermic conditions, that is, in a totally functional state in which organ metabolic and secretory activities remain unaltered if compared to those performed in the human body.

For that purpose, the device is able to generate an environment that mimics the conditions in the human body. It is necessary to maintain the organ in oxygenated conditions, at a temperature of 37°C. Likewise, it is essential to maintain physiological haemodynamic conditions (flow rate and pressure) for each organ as well as to ensure a continuous supply of nutrients and chemical signals.

The device comprises several permanent elements:
- structure and case containing the rest of the device elements and the connections needed for the required supplies,
- control electronics to manage the device including the user communication interface and the control unit that manages the conditions to be applied to the organ,
- a perfusion circuit to which the organ is connected, through which the perfusion fluid and the substances needed for organ preservation are pumped.

Likewise, the device comprises sensors to take measurements of the flow rate of the perfusion fluid in the ducts that are connected to the organ, the pressure value at least at one point of the circuit, the temperature of the perfusion fluid and of its characteristics. In a preferred embodiment of the device, the perfusion fluid will be similar to blood where the significant parameters to be controlled will be haematocrit and haemoglobin concentration and oxygen saturation.

The perfusion device comprises at least one container intended to hold the organ to be preserved. Preferably the container comprises a holding system to fix the position of the organ.

The organ is placed in the container so that the largest part of its surface remains visible during the perfusion process. Likewise, the organ has to be placed in a position that avoids the perfusion fluid being spilled on the organ surface. This is important to ensure that the colour of the organ -which permits controlling the organ state- is only a function of the current perfusion state and the composition of the fluid that is being pumped through it.

The device also comprises the connections necessary for the required supplies as e.g. for the perfusion fluid, comprises control electronics to manage the device including the user communication interface, and the control unit that manages the conditions that are applied to the organ for its proper preservation. The control unit runs an algorithm that allows the user to control the behaviour of the device remotely as well as to regulate the perfusion process by means of a set of user defined parameters.

The organ should be maintained at the right temperature, so the device comprises at least one heating system. A first heat supply to the organ is obtained by means of supplying heat to the perfusion fluid, which, when pumped through the organ vascular tree, transfers heat to the organ tissue efficiently.

This means of heating works properly if sufficiently high flow rates of the perfusion fluid are reached. Nevertheless, when damaged organs are perfused it is common to find that the vascular tree is contracted, offering a high resistance to flow pass, which provokes that the desired pressure conditions are attained with very low flow rates.

Applying higher perfusion rates would notably increase the perfusion pressure, which may cause unwanted damages to the organ. Likewise, the temperature loss causes the additional contraction of the organ vascular network, increasing the blocking effect. Therefore, using the perfusion fluid as the unique organ heat supply for normothermic perfusion is adequate to be applied on damaged organs with higher resistances to the pass of flow.

To solve this problem, besides having inlets and outlets for perfusion fluid, drugs and other substances, the container is provided with means for heat supply that are independent of the perfusion fluid and allow controlling the organ temperature.

The device is powered by electric energy obtained from the mains or from batteries. Moreover, it must be connected to a gas supply (oxygen/carbogen) that may come from an external source or from a reservoir included in the device.

Likewise, it also comprises at least a main pumping system to pump perfusion fluid to the organ. Moreover, to compensate the perfusion fluid volume loss (caused, e.g., by the urine production when a kidney is perfused) a replacement fluid may be added to the perfusion fluid to maintain constant its composition. For that purpose, when the device is used to perfuse organs that generate a substantial fluid volume during its perfusion as a result of its metabolic activity -which alters the composition of the perfusion fluid-, the device comprises a reposition pumping system to pump replacement fluid - complementary fluid to the perfusion fluid-, by which the variations of the composition of the perfusion fluid can be corrected.

The device also comprises a dosing pumping system that allows controlling the introduction of additional substances to the perfusion circuit such as, for instance, nutrients, glucose, etc.

All the parts of the equipment that come into contact with the organ or with the perfusion fluid that is pumped through the organ are replaced every time a new organ perfusion is started. This avoids that waste materials from the former perfusion may contaminate or affect the current perfusion.

Likewise, the device comprises sensors to take measurements of the flow rate of the perfusion fluid in the ducts that are connected to the organ, the pressure value at least at one point of the circuit, the temperature of the fluid and its characteristics. The perfusion fluid will preferably have similar characteristics to blood; in this case, relevant parameters to be controlled are the haematocrit and the haemoglobin concentration and oxygen saturation.

A main feature of the proposed device is that it comprises at least an artificial vision system that comprises at least one camera, for video or image taking, which is focused on the organ to control the organ status by means of the study of the organ colour. For that purpose, the tone and the colour distribution will be checked.

Likewise, the container may comprise additional means for illumination and covering that allow ensuring that the images taken by the artificial vision system are not distorted as a consequence of changing illumination conditions.

One of the advantages of the described perfusion device is that the organ is preserved in better conditions, which implies that, when ready to be used in a transplant operation, it is in better conditions than organs preserved with conventional methods and devices. This is essential to ensure better results of transplantation.

Also, thanks to the proposed device, the organ can be longer maintained outside the body, which allows improving the intra- and extra-hospital logistics and reducing the transplantation costs.

Another advantage associated to this invention is that, since the organ preservation conditions are improved, it is allowed the use of sub-optimal organs or organs obtained from donation after cardiac death. That is, it allows increasing the number of transplanted organs, which entails a reduction of waiting lists, an increase in the number of saved lives and cost reductions.

The device allows generating the conditions needed to resuscitate and/or preserve an organ by means of the impulsion through its vascular network of a fluid specifically designed for that purpose under controlled temperature conditions.

The device may be used for the preservation of liver and kidney.

### DESCRIPTION OF DRAWINGS

To complement the description and aiming to help to a better understanding of the features of the invention, a set of drawings is accompanied as a main part of this description in which, with illustrative and non-limiting character, the following features of the device are depicted:
Figure 1.- It shows a view of the organ perfusion device.
Figure 2.- It shows a section view of the container of the organ perfusion device in another embodiment example.

### DESCRIPTION OF THE PREFERRED EMBODIMENTS

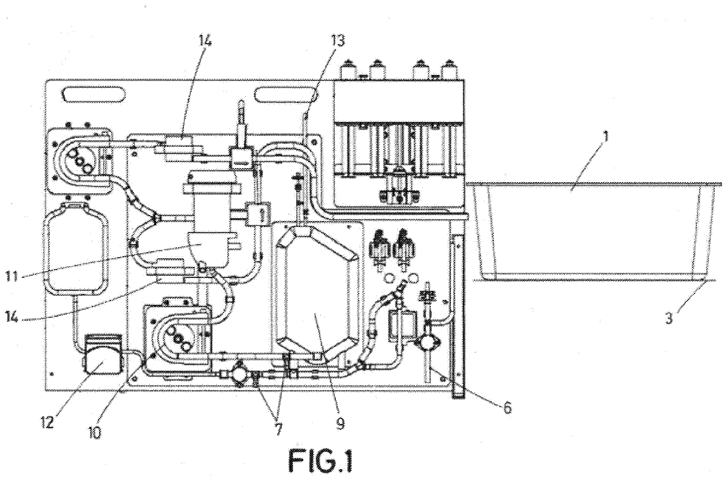

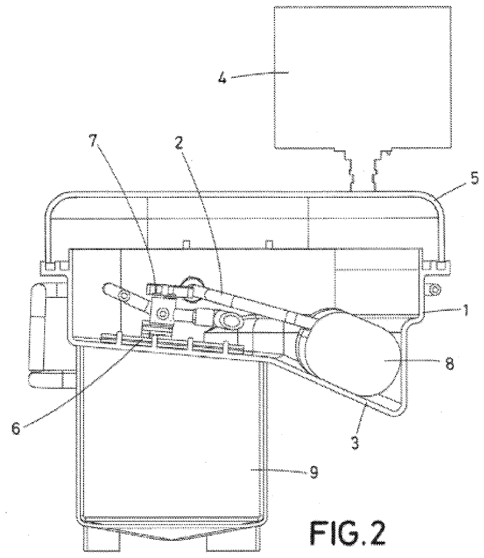

Next, with help of figures 1 and 2, embodiment examples of the invention are presented.

Figure 1 shows the organ perfusion device. The device comprises a container (1) to host the organ to be preserved and a perfusion circuit that comprises the tubes through which the perfusion fluid flows and which are intended to be connected to the organ to allow the pass of the perfusion fluid through the organ. Figure 2 shows a section view of the container (1) with the organ (8) placed in it.

The perfusion circuit also comprises the pumping systems necessary to impel the fluid through the conducts, for its delivery towards the organ (8) or its recirculation after passing through it, to introduce substances in the perfusion fluid that allow maintaining adequate perfusion fluid conditions, etc.

More specifically, the device comprises a main pumping system configured to pump perfusion fluid through the perfusion circuit towards the organ. Such main pumping system comprises at least a main fluid impulsion pump (10) that is connected to a reservoir (9) in which perfusion fluid is stored.

Likewise, the device can comprise a reposition pumping system to pump a replacing fluid that is introduced in the perfusion circuit to compensate the perfusion fluid loss (due to the functioning or the organ (8) that transforms it in other substances such as, e.g., urine if the organ (8) was a kidney) and to restore the characteristics of the perfusion fluid that have been altered after the pass of the fluid through the organ. The pumping reposition system comprises at least a reposition pump (12) and connections to the perfusion circuit.

In a possible embodiment of the device used for kidney preservation, the device additionally comprises a urine measurement system (6).

In cases in which the device is used to preserve an organ (8) that does not generate much fluid such as, e.g., liver, which only produces small volumes of bile compared to the total volume of perfusion fluid, it is not necessary that the device comprises the reposition pumping system.

Preferably the device also comprises a dosing pumping system that serves to introduce in the perfusion fluid substances like nutrients, glucose, etc.

The device comprises a plurality of sensors that acquire information about the conditions and state of the organ (8) and the perfusion fluid. Likewise, the device comprises a control unit that receives information about the most relevant parameters of the perfusion fluid and controls the described pumping systems to ensure that the perfusion fluid conditions are adequate for the right preservation of the organ (8).

The device of the present invention comprises a plurality of valves (7) that allow taking samples or introducing perfusion fluid in the perfusion circuit at the beginning of the process. The device also comprises an oxygenator (11) that is a part of the perfusion circuit.

The described organ perfusion device also comprises an electric supply system and a gas supply system.

One of the parameters that are controlled in the perfusion circuit is the perfusion fluid pressure. In this case, as it is shown in Figure 1, the device comprises a pressure compensation system (13) that ensures that pressure corresponds to the atmospheric in the position of the perfusion circuit where it is installed. Likewise, the system may comprise a plurality of dampeners (14) that eliminate the pulsatile pressure generated by the pumps.

A key feature of this invention is that it comprises an artificial vision system for the observation of the organ (8) colour during the perfusion process. Organ (8) images allow identifying organ (8) irrigation and preservation problems. Irrigation problems may be caused by the obstruction of an artery which causes a region of the organ not be perfused adequately. Preservation problems when the whole organ (8) is well perfused may be detected considering the colour of the organ (tone, brightness, etc.).

A homogeneous organ colour (8), rosy and bright, is sign of good preservation, whereas dark and heterogeneously coloured organs (8) usually render problems after implantation (colour is one of the few variables that surgeons use in order to evaluate the state of the organ (8) immediately after the implantation).

For this purpose, as it is shown in Figure 2, the device container (1) geometry comprises a support surface (3) for the organ (8) that ensures it lies on the minimum support surface (3) and the perfusion fluid does not cover the visible organ (8) surface. Both conditions are essential to ensure the images are correctly taken by the artificial vision system. Figure (2) depicts the organ (8) lying on the support surface (3) of the container (1). In this case, the organ (8) is connected to the perfusion circuit through connections (2) to the organ (8) blood vessels.

The artificial vision system comprises at least one camera (4) oriented towards the inner part of the container (1) to take images of the organ (8) that allows controlling its colour during perfusion. The camera (4) or cameras (4) of the artificial vision system can record video or take pictures and allow visualizing the organ (8) surface that is not covered (the part of the organ that does not lie on the support surface (3) of the container (1) neither is covered by perfusion fluid).

The control unit receives information from the sensors and the artificial vision system and is configured to control the working parameters of the perfusion circuit.

The container preferably comprises illumination and covering means that allow ensuring that its images are not distorted due to changing illumination conditions. For that purpose, the device may additionally comprise illumination means inside the container (1) oriented towards the organ (8). Likewise, the device may comprise an opaque coating to prevent the passage of light into the container (1).

The positioning of the cameras (4) must ensure a good organ (8) visibility, while sterility inside the container (1) is maintained. A first embodiment example, which does not form part of the present invention, comprises at least one camera (4) located inside the container (1) and, therefore, it is necessary to ensure that the cameras (4) maintain sterility. This embodiment allows improving organ visualization (8) since cameras (4) can be located as close as necessary to the organ in order to guarantee good quality imaging.

In a second exemplary embodiment, in accordance with the invention and as represented in Figure 2, the at least one camera (4) is located outside the container (1). This embodiment ensures that sterility is maintained. In this case, the container (1) comprises at least a transparent area to allow organ (8) imaging from the camera (4). The organ (8) can be adequately focused through the transparent areas of the container (1).

Likewise, it is necessary to take into account that the conditions inside the container (1) will be of high temperature and humidity, which may cause the appearance of condensing areas on the container walls, which may difficult organ (8) visualization. To avoid such condensation in the visualization windows, there are several possible solutions:
∘ In an embodiment not forming part of the present invention, the device comprises a heating system disposed in the container and oriented towards the transparent areas of the container (1). This avoids condensation in the desired areas. Such heating system can be electric or be based on the blow of heated air.
∘ Another embodiment of the device, in accordance with the present invention, comprises a cleaning system located inside the container (1), in its transparent areas, able to remove the condensed liquid from the surface of the container (1).

Another important technical feature of the device of this invention is that it comprises a heating system for the container. The aim of this system is to obtain an adequate temperature in the whole volume of the organ (8). However, heat transfer through this heating method takes place through the external surface of the organ (8). Thus, the temperature applied to the organ surface should not be higher than 37°C in order to avoid damaging tissue.

The container (1) heating system is selected among:
- infrared radiation means located inside the container;
- heat conduction means that comprise an external jacket aimed to be located around the organ, which comprises a fluid circulation system for the passage of a warm fluid;
- air-based heating means that comprise an air connection towards the inner volume of the container for the introduction of warm humid air inside the container. Such system should ensure that the air introduced in the container is free of substances that may contaminate the organ and, therefore, air should be conveniently filtrated before being introduced in the container.

The device preferably comprises two temperature sensors to regulate the functioning of the heating system. Temperature measurements of the organ (8) surface will be carried out in two possible ways:
- by means of a contactless temperature measuring system such as, e.g., an infrared temperature measuring system;
- by means of temperature sensors adhered to the organ surface (in this embodiment the device comprises at least one temperature sensor of the organ surface).

Likewise, the device comprises an additional temperature sensor configured to determine the organ (8) temperature. This additional temperature sensor is configured to be inserted in the organ (8) without causing damage to the organ tissue through the following ways:
1. Through the renal artery.
2. Through the renal vein.
3. Through the ureter.

## Claims

1. Organ perfusion device that comprises a container (1) to host an organ (8), and a perfusion circuit that comprises ducts (2) through which a perfusion fluid i can be pumped and that are configured to be connected to the organ (8) to permit the passage of perfusion fluid through it, wherein:
- the container (1) comprises a support surface (3) for the organ (8) that minimises the contact area with the organ and ensures that the perfusion fluid does not cover the visible surface of the organ (8);
and the organ perfusion device further comprises:
- an artificial vision system that comprises at least one camera (4), located outside the container (1), and oriented towards the inside of the container (1) to take images from the organ (8) that allow controlling the organ colour during perfusion;
- a plurality of sensors that are configured to capture information about conditions of the organ (8) and the perfusion fluid;
- a control unit that is configured to receive information from the sensors and the artificial vision system and that is configured to control the functioning parameters of the perfusion circuit; wherein
- the container comprises at least one transparent area that allows taking images from the organ (8) with the camera (4); and
- the organ perfusion device comprises a cleaning system i inside the container (1), in its transparent areas, configured to remove condensed liquid from the surface of the container (1).

2. Organ perfusion device according to claim 1 **characterised in that** the container additionally comprises illumination means disposed inside and oriented towards the support surface (3) on which, in use, the organ (8) is lying.

3. Organ perfusion device according to claim 1 **characterised in that** the container (1) comprises an opaque coating to prevent the passage of light into the container.

4. Organ perfusion device according to claim 1 **characterised in that** it comprises a heating system for the container selected among:
- infrared radiation means located in the container;
- heat conduction means that comprise an external jacket configured to be placed around the organ (8) and that comprises a fluid circulation system for the passage of a warm fluid;
- air-based heating means that comprise an air connection towards the inner volume of the container to introduce warm humid air inside the container.

5. Organ perfusion device according to claim 4 **characterised in that** it comprises at least one temperature sensor configured to be adhered to the surface of the organ (8).

6. Organ perfusion device according to claim 4 **characterised in that** it comprises a temperature sensor configured to be inserted inside the organ (8).

## Patentansprüche

1. Organperfusionsvorrichtung, die einen Behälter (1) zum Aufnehmen eines Organs (8) und einen Perfusionskreislauf umfasst, der Kanäle (2) umfasst, durch die ein Perfusionsfluid gepumpt werden kann und die konfiguriert sind, um mit dem Organ (8) verbunden zu werden, um den Durchgang von Perfusionsfluid dadurch zu ermöglichen, wobei:
- der Behälter (1) eine Trägeroberfläche (3) für das Organ (8) umfasst, welche die Kontaktfläche mit dem Organ minimiert und sicherstellt, dass das Perfusionsfluid die sichtbare Oberfläche des Organs (8) nicht bedeckt;
und wobei die Organperfusionsvorrichtung ferner umfasst:
- ein künstliches Sichtsystem, das mindestens eine Kamera (4) umfasst, die außerhalb des Behälters (1) angeordnet ist und in Richtung der Innenseite des Behälters (1) ausgerichtet ist, um Bilder von dem Organ (8) zu nehmen, die das Steuern der Organfarbe während der Perfusion ermöglichen;
- eine Vielzahl von Sensoren, die dazu ausgebildet ist, Information über Zustände des Organs (8) und des Perfusionsfluids zu erfassen;
- eine Steuereinheit, die dazu ausgebildet ist, um Information von den Sensoren und dem künstlichen Sichtsystem zu empfangen und die dazu ausgebildet ist, die Funktionsparameter des Perfusionskreislaufs zu steuern; wobei
- der Behälter mindestens einen transparenten Bereich umfasst, der das Nehmen von Bildern von dem Organ (8) mit der Kamera (4) ermöglicht; und
- die Organperfusionsvorrichtung ein Reinigungssystem innerhalb des Behälters (1), in dessen transparenten Bereichen, umfasst, das dazu ausgebildet sind, kondensierte Flüssigkeit von der Oberfläche des Behälters (1) zu entfernen.

2. Organperfusionsvorrichtung nach Anspruch 1, **dadurch gekennzeichnet, dass** der Behälter zusätzlich Beleuchtungsmittel umfasst, die innen angeordnet und auf die Trägeroberfläche (3) ausgerichtet sind, auf der das Organ (8) während der Verwendung liegt.

3. Organperfusionsvorrichtung nach Anspruch 1, **dadurch gekennzeichnet, dass** der Behälter (1) eine undurchsichtige Beschichtung umfasst, um den Durchgang von Licht in den Behälter zu verhindern.

4. Organperfusionsvorrichtung nach Anspruch 1, **dadurch gekennzeichnet, dass** diese ein Heizsystem für den Behälter umfasst, ausgewählt aus:
- Infrarotstrahlmitteln, die in dem Behälter angeordnet sind;
- Wärmeleitungsmitteln, die einen externen Mantel umfassen, der dazu ausgebildet ist, um um das Organ (8) herum platziert zu werden und die ein Fluidzirkulationssystem für den Durchgang eines warmen Fluids umfassen;
- luftbasierte Heizmittel, die eine Luftverbindung in Richtung des Innenvolumens des Behälters zum Einführen von warmer feuchter Luft innerhalb des Behälters umfassen.

5. Organperfusionsvorrichtung nach Anspruch 4, **dadurch gekennzeichnet, dass** sie mindestens einen Temperatursensor umfasst, der dazu ausgebildet ist, um an der Oberfläche des Organs (8) zu haften.

6. Organperfusionsvorrichtung nach Anspruch 4, **dadurch gekennzeichnet, dass** diese einen Temperatursensor umfasst, der dazu ausgebildet ist, in das Organ (8) eingeführt zu werden.

## Revendications

1. Dispositif de perfusion d'organes qui comprend un contenant (1) pour recevoir un organe (8), et un circuit de perfusion qui comprend des conduits (2) à travers lesquels un fluide de perfusion peut entrer et qui sont configurés pour être raccordés à l'organe (8) pour permettre le passage du fluide de perfusion à travers celui-ci, dans lequel :
- le contenant (1) comprend une surface de support (3) pour l'organe (8) qui minimise la zone de contact avec l'organe et garantit que le fluide de perfusion ne couvre pas la surface visible de l'organe (8) ;
et le dispositif de perfusion d'organes comprend en outre :
- un système de vision artificielle qui comprend au moins une caméra (4), située à l'extérieur du contenant (1), et orientée vers l'intérieur du contenant (1) pour prendre des images de l'organe (8) qui permettent de contrôler la couleur de l'organe pendant la perfusion ;
- une pluralité de capteurs qui sont configurés pour capturer des informations sur les conditions de l'organe (8) et le fluide de perfusion ;
- une unité de contrôle qui est configurée pour recevoir des informations des capteurs et du système de vision artificielle et qui est configurée pour contrôler les paramètres de fonctionnement du circuit de perfusion ; dans lequel
- le contenant comprend au moins une zone transparente qui permet de prendre des images de l'organe (8) avec la caméra (4) ; et
- le dispositif de perfusion d'organes comprend un système de nettoyage à l'intérieur du contenant (1), dans ses zones transparentes, configuré pour éliminer le liquide condensé de la surface du contenant (1).

2. Dispositif de perfusion d'organes selon la revendication 1 **caractérisé en ce que** le contenant comprend en outre des moyens d'éclairage disposés à l'intérieur et orientés vers la surface de support (3) sur laquelle, lorsqu'il est utilisé, l'organe (8) est couché.

3. Dispositif de perfusion d'organes selon la revendication 1 **caractérisé en ce que** le contenant (1) comprend un revêtement opaque pour empêcher le passage de la lumière dans le contenant.

4. Dispositif de perfusion d'organes selon la revendication 1 **caractérisé en ce qu'**il comprend un système de chauffage pour le contenant choisi parmi :
- des moyens de rayonnement infrarouge situés dans le contenant ;
- des moyens de conduction thermique qui comprennent une chemise externe configurée pour être placée autour de l'organe (8) et qui comprend un système de circulation de fluide pour le passage d'un fluide chaud ;
- des moyens de chauffage à air qui comprennent un raccordement d'air vers le volume interne du contenant pour introduire de l'air chaud et humide à l'intérieur du contenant.

5. Dispositif de perfusion d'organes selon la revendication 4 **caractérisé en ce qu'**il comprend au moins un capteur de température configuré pour être adhéré à la surface de l'organe (8).

6. Dispositif de perfusion d'organes selon la revendication 4 **caractérisé en ce qu'**il comprend un capteur de température configuré pour être inséré à l'intérieur de l'organe (8).
